# FASCICULE DE BREVET EUROPEEN

(11) **EP 2 541 693 B1**
(45) Date de publication et mention de la délivrance du brevet: **27.02.2019**
(21) Numéro de dépôt: 12173219.2
(22) Date de dépôt: 22.06.2012
(51) Int. Cl.: H01R 13/58, H02G 3/22

(54) **Dispositif de blocage de faisceaux de conducteurs pour connecteur de raccordement**
Blockiervorrichtung für Leitungskabelbündel für Verbindungsanschluss
Device for blocking bundles of conductors for coupling connector

(30) Priorité: 28.06.2011 FR 1155732
(43) Date de publication de la demande: 02.01.2013
(73) Titulaire: Amphenol Air LB, 08110 Blagny (FR)
(72) Inventeur: Montet, Davy, 08160 Vendresse (FR)
(74) Mandataire: Caillet, Isabelle

(56) Documents cités:
- GB-A- 1 351 310
- US-A1- 2002 090 857
- US-A1- 2005 079 751
- US-A1- 2010 029 122
- US-B1- 6 234 823

## Description

L'invention concerne, de manière générale, les connecteurs de raccordement de câbles électriquement conducteurs.

Plus particulièrement, l'invention concerne le raccordement de faisceaux de câbles électriquement conducteurs au moyen d'un connecteur de raccordement.

Les connecteurs sont dotés de bornes servant à la fixation mécanique et au raccordement électrique d'extrémités à raccorder des câbles.

Lorsqu'il s'agit de raccorder un faisceau de conducteurs, chaque borne de connexion est dotée d'un élément de raccordement dans lequel vient se loger une extrémité du conducteur.

Un capot, parfois doté d'un guide-câble, peut venir se monter sur le connecteur pour venir protéger les moyens de raccordement électriques des conducteurs.

Le guide-câble assure un guidage latéral des conducteurs afin d'éviter que des sollicitations auxquelles les conducteurs peuvent être soumis provoquent leur déconnexion.

Le problème de la déconnexion intempestive des conducteurs se pose de façon accrue lorsqu'il s'agit de raccorder des faisceaux de conducteurs qui sont soumis à un environnement vibratoire intense.

Tel est en particulier le cas à bord d'aéronefs, dans lesquels l'environnement vibratoire engendre des sollicitations mécaniques sur les éléments de raccordement électriques.

En tout état de cause, les capots de protection dotés de guides-câble ne sont appropriés pour assurer une protection des éléments de raccordement électrique contre les arrachements, dans la mesure où ils ne procurent aucun maintien actif des conducteurs.

Un tel dispositif connu, représentant l'état de la technique plus proche, est divulgue par le document US2010/029122A1.

Le but de l'invention est donc de pallier les inconvénients précités et de proposer un dispositif de blocage de conducteurs, en particulier mais non exclusivement, pour aéronefs, capable d'assurer un maintien actif des conducteurs et ce, dans un agencement simple, relativement peu coûteux à réaliser et particulièrement aisé à mettre en oeuvre.

L'invention a donc pour objet un dispositif de blocage d'un ensemble d'au moins un faisceau d'au moins un conducteur pour connecteur de raccordement dudit faisceau, comprenant un corps venant se fixer sur le connecteur et, pour chaque faisceau, un organe guide-câble.

Ce dispositif de blocage comporte en outre, pour chaque faisceau, un élément de verrouillage du faisceau dans l'organe guide-câble.

Dans un mode de réalisation, l'organe guide-câble comporte un conduit dressé à partir du corps.

Selon l'invention, l'élément de verrouillage est, quant à lui, monté déplaçable par rapport à l'organe guide-câble entre une première position permettant l'insertion du faisceau dans l'organe guide-câble et une deuxième position de serrage du faisceau dans l'organe guide-câble.

Selon une caractéristique du dispositif de blocage, le conduit comporte une paroi périphérique ayant une ouverture longitudinale de passage du faisceau.

Selon une autre caractéristique, l'élément de verrouillage comporte un manchon rotatif par rapport à l'organe guide-câble et comprenant une ouverture longitudinale débouchant dans l'ouverture du conduit dans sa première position.

Avantageusement, l'élément de verrouillage comporte une ouverture débouchant dans un canal longitudinal interne, cette ouverture étant désaxée par rapport à une ouverture correspondante du conduit.

L'élément de verrouillage comporte de préférence un revêtement de matériau élastiquement déformable, notamment en silicone, par lequel il vient serrer le faisceau.

Ce revêtement peut comporter des crans.

Selon encore une autre caractéristique, le corps comporte des pattes d'encliquetage destinées à coopérer avec des moyens d'encliquetage prévus sur le connecteur.

L'invention a également pour objet, selon un autre aspect, un connecteur de raccordement d'un ensemble d'au moins un faisceaux d'au moins un conducteur comprenant un boîtier comprenant un ensemble de bornes de connexion pour le raccordement respectif des faisceaux, et comprenant en outre un capot comportant un dispositif de blocage tel que défini ci-dessus, monté sur le boîtier.

D'autres buts, caractéristiques et avantages de l'invention apparaîtront à la lecture de la description suivante, donnée uniquement à titre d'exemple non limitatif, et faite en référence aux dessins annexés, sur lesquels :
- la figure 1 est une vue en perspective d'un dispositif de blocage pour faisceau de conducteur conforme à l'invention ;
- la figure 2 montre le dispositif de la figure 1, monté sur un connecteur, dans diverses positions des éléments de verrouillage ; et
- la figure 3 montre le dispositif de blocage de la figure 1, monté sur un connecteur, après insertion des faisceaux de conducteurs dans les organes guide-câble, et avant serrage des moyens de verrouillage.

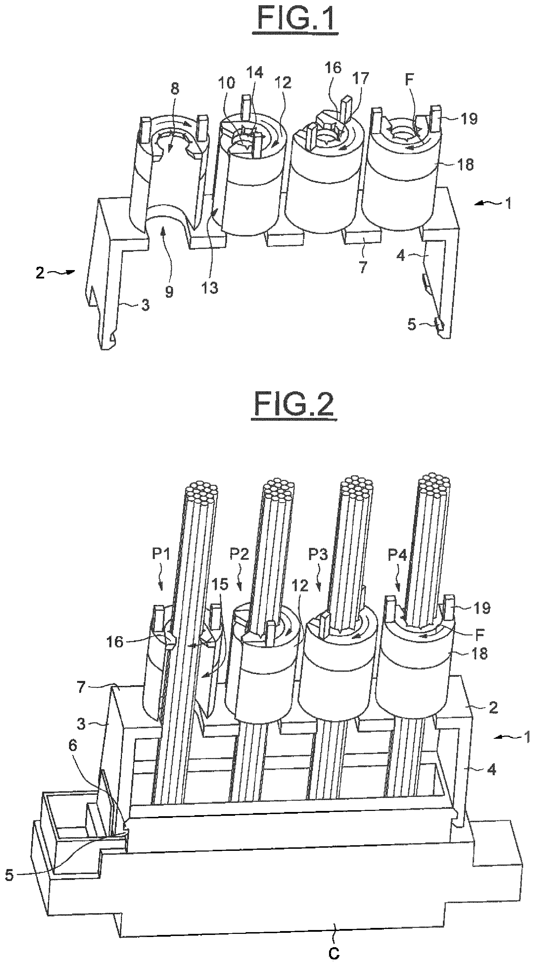

Sur la figure 1, on a représenté un dispositif de blocage pour faisceaux de conducteurs, désigné par la référence numérique générale 1.

Ce dispositif 1 est destiné à assurer un maintien et un guidage d'un ensemble de faisceaux de conducteurs, ici au nombre de quatre, raccordés dans des bornes de raccordement électriques d'un connecteur.

Dans une application particulièrement intéressante, un tel dispositif est destiné à coopérer avec un connecteur pour assurer le raccordement électrique et la fixation mécanique de faisceaux de câbles d'un réseau de bord d'un aéronef.

Alors que dans l'exemple de réalisation illustré sur la figure, le dispositif 1 est destiné à assurer le blocage de quatre faisceaux de conducteurs, on notera que l'on ne sort pas du cadre de l'invention lorsque le dispositif de blocage assure le blocage d'un nombre différent de faisceaux de conducteurs. De même, le dispositif 1 peut être adapté pour assurer le blocage d'un nombre quelconque de faisceaux pouvant comporter un ou plusieurs câbles conducteurs.

Comme on le voit sur la figure 1, le dispositif 1 comporte essentiellement un corps 2 réalisé en matière thermoplastique qui est destiné à venir se monter sur un connecteur C (figure 2).

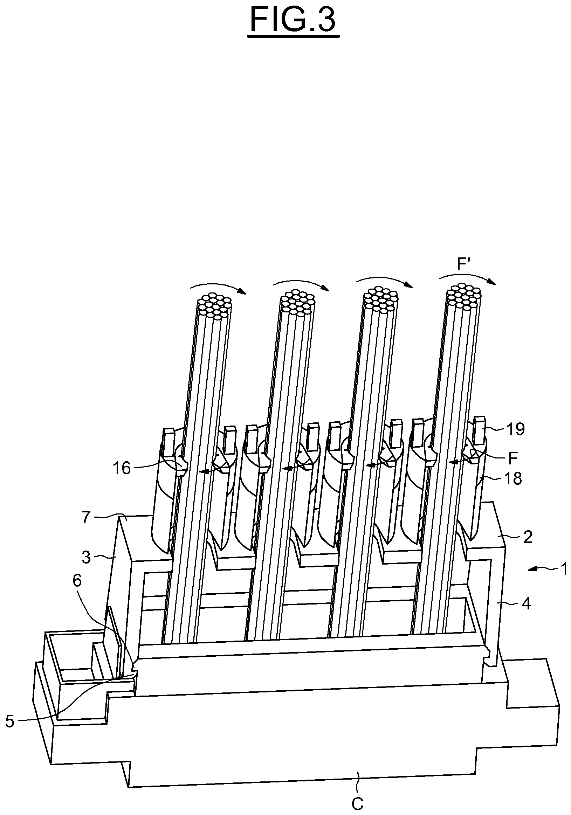

Il est à cet effet pourvu de pattes latérales d'encliquetage 3 et 4 dotées de dents d'extrémité, telles que 5, destinées à coopérer avec des dents d'encliquetage, telles que 6 (figures 2 et 3) prévues dans le connecteur C.

Le corps 2 comporte encore un plateau supérieur 7, porté par les pattes 3 et 4. Le plateau 7 s'étend à l'opposé des dents 5 de sorte que, lorsque le corps 2 est monté sur le connecteur C, les pattes 4 constituent une entretoise de manière que le plateau 7 soit situé à distance de bornes de raccordement des conducteurs.

Le plateau 7 est doté d'un ensemble d'organes guides-câble, tels que 8, ici au nombre de quatre, réalisé sous la forme d'un ensemble de conduits dressés à partir du plateau 7.

Comme on le voit, chaque conduit 8 a une forme générale cylindrique mais présente un secteur ouvert. En d'autres termes, la paroi périphérique du conduit 8 comporte une ouverture 9 permettant le passage d'un faisceau de conducteurs. Au niveau de sa face d'extrémité supérieure, le conduit 8 comporte une ouverture 10 de forme oblongue qui se prolonge latéralement en coïncidant avec l'ouverture longitudinale 9 du conduit.

L'ensemble constitué par les pattes latérales d'encliquetage 3 et 4, le plateau supérieur 7 et les conduits 8 est réalisé en une seule pièce par moulage d'une matière thermoplastique.

On voit par ailleurs sur la figure 1 que le dispositif de blocage 1 est complété par un ensemble d'éléments de verrouillage associés chacun à l'un des conduits 8.

Ces éléments de verrouillage, désignés par la référence numérique générale 12, constituent des manchons rotatifs qui viennent coiffer les conduits 8. Ils adoptent dès lors une forme complémentaire de celle de conduits 8 et comportent une paroi périphérique cylindrique interrompue par une ouverture longitudinale 13 destinée à coïncider avec l'ouverture 9 des conduits sur lesquels ils viennent respectivement se monter lors de l'insertion des faisceaux de conducteurs, et qui s'étend selon un secteur correspondant à celui des ouvertures.

En partie supérieure, les manchons 12 comportent une paroi dotée d'une ouverture 14, également de forme oblongue, qui débouche latéralement au niveau de l'ouverture longitudinale 13. On notera toutefois que l'ouverture 14 des manchons 12 et l'ouverture 10 des conduits 8 sont mutuellement désaxées. Ces ouvertures 10 et 14 délimitent respectivement un passage qui communique avec un canal interne 15, délimité intérieurement par les conduits 8 et les manchons rotatifs 12.

Lorsque les manchons 12 sont déplacés angulairement par rapport aux conduits 8, la section utile du passage diminue, ce qui permet aux manchons de venir serrer les faisceaux, et les bloquer en position, éliminant ainsi toute sollicitation qui pourrait s'exercer sur les bornes du connecteur C.

Comme on le voit, le bord périphérique de l'ouverture 13 peut être doté d'un revêtement 16 de matériau élastiquement déformable, de préférence du silicone, avantageusement surmoulé pour éviter tout risque d'arrachement, afin de procurer un serrage efficace tout en évitant tout risque de détérioration des conducteurs.

Comme on le voit, ce surmoulage 16 est avantageusement doté de crans tels que 17, ou crampons, pour améliorer la prise.

En partie supérieure, chaque manchon peut être pourvu d'une zone nervurée, telle que 18, et/ou de pions dressés tel que 19, permettant d'améliorer la préhension du manchon. Une flèche F peut enfin être prévue pour indiquer le sens du serrage.

Comme indiqué précédemment, chaque manchon 12 vient se positionner autour de l'un des conduits 8.

On conformera avantageusement les manchons 12 et les conduits 8 de manière à éviter leur démontage intempestif. Par exemple, on pourra prévoir, en partie inférieure des manchons, c'est-à-dire à l'opposé de l'ouverture 14, une nervure périphérique interne (non représentée) qui vient, au montage, s'encliqueter dans une gorge périphérique externe prévue sur la paroi périphérique du conduit.

Bien entendu, d'autres types d'assemblage peuvent également être prévus, sans sortir du cadre de l'invention. Par exemple, on pourra prévoir d'assembler les manchons sur les conduits en prévoyant sur les manchons 12 un ergot interne destiné à coopérer avec une gorge périphérique externe prévue dans les conduits et qui débouche, en fin de course de serrage, dans un logement. Un tel mode de réalisation est alors avantageux dans la mesure où il permet d'encliqueter les manchons dans les conduits, en fin de course de serrage, et d'éviter ainsi tout risque de desserrage intempestif.

En se référant maintenant aux figures 2 et 3, le dispositif de blocage 1 qui vient d'être décrit s'utilise de la façon suivante.

On notera en premier lieu que ce dispositif vient se monter sur le connecteur après installation des faisceaux de conducteurs. Il n'est donc pas nécessaire d'associer ce dispositif de blocage aux faisceaux avant leur connexion.

Pour bloquer les conducteurs après leur raccordement, il convient en effet simplement d'orienter les manchons rotatifs 12 de manière à faire coïncider leur ouverture longitudinale 13 avec l'ouverture longitudinale 9 des conduits et d'insérer le faisceau de câbles préalablement connecté dans le canal formé conjointement par les manchons 12 et conduits 8. On procède ensuite à l'encliquetage des pattes 3 et 4 sur le connecteur. On procède alors au serrage des conducteurs en tournant les manchons selon les flèches F' (positions P1 à P4). On obtient ainsi un maintien efficace et fiable des connecteurs s'opposant à toute sollicitation ou effort qui pourrait leur être appliqué, soit latéralement, soit verticalement.

## Revendications

1. Dispositif de blocage d'un ensemble d'au moins un faisceau d'au moins un conducteur pour connecteur (C) de raccordement dudit faisceau, comprenant un corps (2) venant se fixer sur le connecteur et, pour chaque faisceau, un organe guide-câble (8), le dispositif de blocage comportant, pour chaque faisceau, un élément de verrouillage (12) du faisceau dans l'organe guide-câble, **caractérisé en ce que** l'élément de verrouillage est monté déplaçable par rapport à l'organe guide-câble entre une première position permettant l'insertion du faisceau dans l'organe guide-câble et une deuxième position de serrage du faisceau dans l'organe guide-câble.

2. Dispositif selon la revendication 1, **caractérisé en ce que** l'organe guide-câble comporte un conduit (8) dressé à partir du corps (2).

3. Dispositif selon la revendication 2, **caractérisé en ce que** le conduit (8) comporte une paroi périphérique ayant une ouverture (9) longitudinale de passage du faisceau.

4. Dispositif selon la revendication 3, **caractérisé en ce que** l'élément de verrouillage (12) comporte un manchon rotatif par rapport à l'organe guide-câble et comprenant une ouverture longitudinale (13) débouchant dans l'ouverture (9) du conduit dans sa première position.

5. Dispositif selon la revendication 4, **caractérisé en ce que** l'élément de verrouillage comporte une ouverture (14) débouchant dans un canal (15) longitudinal interne, cette ouverture étant désaxée par rapport à une ouverture (10) correspondante du conduit.

6. Dispositif selon l'une quelconque des revendications 1 à 5, **caractérisé en ce que** l'élément de verrouillage (12) comporte un revêtement (16) de matériau élastiquement déformable, notamment en silicone, par lequel il vient insérer le faisceau.

7. Dispositif selon la revendication 6, **caractérisé en ce que** le revêtement comporte des crans (17).

8. Dispositif selon l'une quelconque des revendications 1 à 7, **caractérisé en ce que** le corps comporte des pattes (3, 4) d'encliquetage destinées à coopérer avec des moyens d'encliquetage prévus sur le connecteur.

9. Connecteur de raccordement d'un ensemble d'au moins un faisceau d'au moins un conducteur comprenant un boîtier comprenant un ensemble de bornes de connexion pour le raccordement respectif des faisceaux, **caractérisé en ce qu'**il comporte en outre un capot (1) comprenant un dispositif de blocage selon l'une quelconque des revendications 1 à 8, monté sur le boîtier.

## Patentansprüche

1. Vorrichtung zur Blockierung einer Anordnung wenigstens eines Bündels von wenigstens einer Leitung für einen Verbinder (C) zum Anschluss des Bündels, welche einen Körper (2), der auf dem Verbinder befestigt wird, und für jedes Bündel ein Kabelführungsglied (8) umfasst, wobei die Blockiervorrichtung für jedes Bündel ein Element zur Verriegelung (12) des Bündels in dem Kabelführungsglied aufweist, **dadurch gekennzeichnet, dass** das Verriegelungselement bezüglich des Kabelführungsgliedes verlagerbar zwischen einer ersten Position, welche die Einführung des Bündels in das Kabelführungsglied ermöglicht, und einer zweiten Position des Festklemmens des Bündels in dem Kabelführungsglied angebracht ist.

2. Vorrichtung nach Anspruch 1, **dadurch gekennzeichnet, dass** das Kabelführungsglied ein Rohr (8) umfasst, das von dem Körper (2) hochsteht.

3. Vorrichtung nach Anspruch 2, **dadurch gekennzeichnet, dass** das Rohr (8) eine Umfangswand mit einer Längsöffnung (9) zur Durchführung des Bündels aufweist.

4. Vorrichtung nach Anspruch 3, **dadurch gekennzeichnet, dass** das Verriegelungselement (12) eine Hülse aufweist, die bezüglich des Kabelführungsgliedes drehbar ist und eine Längsöffnung (13) umfasst, die in ihrer ersten Position in die Öffnung (9) des Rohres mündet.

5. Vorrichtung nach Anspruch 4, **dadurch gekennzeichnet, dass** das Verriegelungselement eine Öffnung (14) aufweist, die in einen inneren, längs verlaufenden Kanal (15) mündet, wobei diese Öffnung bezüglich einer entsprechenden Öffnung (10) des Rohres achsenversetzt ist.

6. Vorrichtung nach einem der Ansprüche 1 bis 5, **dadurch gekennzeichnet, dass** das Verriegelungselement (12) eine Beschichtung (16) aus elastisch verformbarem Material, insbesondere aus Silikon, aufweist, durch welche das Bündel eingeführt wird.

7. Vorrichtung nach Anspruch 6, **dadurch gekennzeichnet, dass** die Beschichtung Zacken (17) aufweist.

8. Vorrichtung nach einem der Ansprüche 1 bis 7, **dadurch gekennzeichnet, dass** der Körper Rastansätze (3, 4) aufweist, die dazu bestimmt sind, mit am Verbinder vorgesehenen Rastmitteln zusammenzuwirken.

9. Verbinder zum Anschluss einer Anordnung wenigstens eines Bündels von wenigstens einer Leitung, welcher ein Gehäuse umfasst, das eine Anordnung von Anschlussklemmen für den jeweiligen Anschluss der Bündel umfasst, **dadurch gekennzeichnet, dass** er außerdem eine Kappe (1) aufweist, die eine Vorrichtung zur Blockierung nach einem der Ansprüche 1 bis 8 umfasst, die auf dem Gehäuse angebracht ist.

## Claims

1. Device for blocking a set of at least one beam of at least one conductor for a connector (C) coupling said beam, comprising a body (2) coming to be fixed to the connector and, for each beam, a cable-guide member (8), the blocking device comprising, for each beam, a locking element (12) for locking the beam in the cable-guide member, **characterized in that** the locking element is movable mounted relative to the cable-guide member between a first position allowing the insertion of the beam into the cable-guide member and a second position clamping the beam in the cable-guide member.

2. Device according to Claim 1, **characterized in that** the cable-guide member comprises a duct (8) erected from the body (2).

3. Device according to Claim 2, **characterized in that** the duct (8) comprises a peripheral wall having a longitudinal opening (9) for passage of the beam.

4. Device according to Claim 3, **characterized in that** the locking element (12) comprises a sleeve that is rotary relative to the cable-guide member and comprising a longitudinal opening (13) emerging in the opening (9) of the duct in its first position.

5. Device according to Claim 4, **characterized in that** the locking element (12) comprises an opening (14) emerging in an internal longitudinal channel (15), this opening being eccentric relative to a corresponding opening (10) of the duct.

6. Device according to any one of Claims 1 to 5, **characterized in that** the locking element (12) comprises a coating (16) of elastically deformable material, notably made of silicone, by which it clamps the beam.

7. Device according to Claim 6, **characterized in that** the coating (16) includes notches (17).

8. Device according to any one of Claims 1 to 7, **characterized in that** the body includes snap-fitting tabs (3, 4) intended to cooperate with snap-fitting means provided on the connector.

9. Connector for coupling a set of at least one beam of at least one conductor comprising a housing comprising a set of connection terminals for respectively coupling the beams, **characterized in that** it further comprises a cap (1) comprising a blocking device according to any one of Claims 1 to 8, mounted on said housing.
